# EUROPÄISCHE PATENTANMELDUNG

(11) **EP 4 725 850 A2**
(43) Veröffentlichungstag der Anmeldung: **15.04.2026**
(21) Anmeldenummer: 25201768.6
(22) Anmeldetag: 12.09.2025
(51) Int. Cl.: B65B 7/16, B65B 25/00, B65B 25/22, B65B 31/02, B65B 55/02, B65B 55/08, B65B 61/02, B65B 65/00, B65C 1/02, A23B 2/08, A23B 2/10, A23B 2/721, B65D 77/22, B65D 81/34

(54) **VORRICHTUNG SOWIE VERFAHREN ZUM BEGASEN EINER MIT EINEM MIKROWELLENGEGARTEN PRODUKT BEFÜLLTEN VERPACKUNG MIT EINEM SCHUTZGAS**

(30) Priorität: 11.10.2024 DE 102024129416
(71) Anmelder: MULTIVAC Sepp Haggenmüller SE & Co. KG, 87787 Wolfertschwenden (DE)
(72) Erfinder: FACKLER, Sebastian, 87724 Ottobeuren (DE)
(74) Vertreter: Grünecker Patent- und Rechtsanwälte PartG mbB

(57) **Zusammenfassung**

Die Erfindung bezieht sich auf eine Vorrichtung (1) zum Mikrowellengaren eines innerhalb einer Verpackung (2) aufgenommenen Produkts und zum Anreichern eines freien Packungsvolumens (S) mit einem Schutzgas (G), wobei die Vorrichtung (1) in Produktionsrichtung (R) eine Mikrowellenstation (3) mit einem Mikrowellentunnel (4) zum Mikrowellengaren des Produkts (P) der in ihn hineingeführten Verpackung (2) und eine in Produktionsrichtung (R) der Mikrowellenstation (3) nachgelagerte Schutzgasstation (5) aufweist, die einen mit dem Schutzgas (G) angereichten Bereich (B) ausgebildet, und wobei für eine direkte Übergabe der mit dem mikrowellengegarten Produkt (P) beladenen Verpackung (2) aus dem Mikrowellentunnel (4) der Mikrowellenstation (3) in den mit dem Schutzgas (G) angereicherten Bereich (B) der Schutzgasstation (5) ein Ausgang (7a) des Mikrowellentunnels (4) und ein Eingang (7b) des mit dem Schutzgas (G) angereicherten Bereichs (B) der Schutzgasstation (5) unmittelbar aneinander angrenzend angeordnet sind. Ferner betrifft die Erfindung ein demensprechendes Verfahren.

## Beschreibung

Die vorliegende Erfindung bezieht sich auf eine Vorrichtung gemäß Anspruch 1 zum Mikrowellengaren eines innerhalb einer Verpackung aufgenommenen Produkts und zum Anreichern eines freien Packungsvolumens mit einem Schutzgas. Des Weiteren bezieht sich die Erfindung auf ein dementsprechendes Verfahren gemäß Anspruch 15.

WO 2021/051211 A1 offenbart eine Vorrichtung mit einer Mikrowelle sowie einer in Produktionsrichtung zur Mikrowelle beabstandet positionierten Vakuumkammer, die durch ein Transportband miteinander verbunden sind. In die Mikrowelle werden Verpackungen mit darin aufgenommenen Lebensmitteln hineintransportiert. Die Produkte werden innerhalb der Mikrowelle dampfgegart, wobei dadurch entstehender Wasserdampf durch eine Öffnung der Verpackung entweichen kann. Nach dem Dampfgarprozess verlassen die Verpackungen die Mikrowelle und werden auf dem Transportband entlang einer zur Umgebung hin offenen Strecke weitertransportiert, um in die stromabwärts positionierte Vakuumkammer zu gelangen. Während des Transports zwischen der Mikrowelle und der Vakuumkammer, d.h. im Freien zwischen diesen beiden Stationen, kann Wasserdampf aus den Verpackungen strömen, sodass die Verpackungen abkühlen. Dadurch bildet sich ein Unterdruck innerhalb der Verpackungen, wodurch es zu einem Ansaugen der entlang der offenen Strecke vorliegenden Atmosphäre kommen kann. In der anschließenden Vakuumkammer wird ein Unterdruck auf die darin eingeschlossenen Verpackungen erzeugt, um den verbliebenen Wasserdampf aus den Verpackungen zu saugen. Im Anschluss daran werden die Verpackungen innerhalb der Vakuumkammer mit einem Schutzgas bespült und damit befüllt.

Der gesonderte, voneinander beabstandete Aufbau der Mikrowelle und der Vakuumkammer sowie die separate Einrichtung zum Erzeugen des Unterdrucks innerhalb der Vakuumkammer führen zu erhöhten Herstellungskosten der Vorrichtung. Außerdem ergibt sich dafür ein relativ großer Bauraum für die Vorrichtung.

Aufgabe der Erfindung ist es, eine Vorrichtung sowie ein Verfahren gegenüber der vorangehend beschriebenen Vorrichtung dahingehend zu verbessern, dass sie kostengünstiger herstellbar ist und in bauraumreduzierter Weise, insbesondere energieeffizient, zum Einsatz kommen kann.

Diese Aufgabe wird gelöst mittels einer Vorrichtung nach Anspruch 1 sowie anhand eines Verfahrens gemäß Anspruch 15. Vorteilhafte Weiterbildungen der Erfindung sind durch die jeweiligen Gegenstände der Unteransprüche gegeben.

Die Erfindung betrifft eine Vorrichtung zum Mikrowellengaren eines innerhalb einer Verpackung aufgenommenen Produkts und zum Anreichern eines freien Packungsvolumens mit einem Schutzgas.

Die erfindungsgemäße Vorrichtung weist in Produktionsrichtung eine Mikrowellenstation mit einem Mikrowellentunnel zum Mikrowellengaren des Produkts der in ihn hineingeführten Verpackung und eine in Produktionsrichtung der Mikrowellenstation nachgelagerte Schutzgasstation auf, die einen mit dem Schutzgas angereicherten Bereich ausbildet.

Die Erfindung sieht vor, dass für eine direkte Übergabe der mit dem mikrowellengegarten Produkt beladenen Verpackung aus dem Mikrowellentunnel der Mikrowellenstation in den mit dem Schutzgas angereicherten Bereich der Schutzgasstation ein Ausgang des Mikrowellentunnels und ein Eingang des mit dem Schutzgas angereicherten Bereichs der Schutzgasstation unmittelbar aneinander angrenzend angeordnet sind. Man könnte sagen, dass der Ausgang des Mikrowellentunnels und der Eingang des mit dem Schutzgas angereichten Bereichs unmittelbar ineinander übergehen, sodass die Stationen lückenlos ineinander übergehen. Damit kann die mit dem mikrowellengegarten Produkt befüllte Verpackung direkt, d.h. ohne zwischen den beiden Stationen entlang einer zur Umgebung hin offen gebildeten Strecke transportiert zu werden, sofort im Anschluss an den Mikrowellentunnel in den mit Schutzgas angereicherten Bereich eintreten, sodass ein im Anschluss an den Mikrowellenprozess beginnendes Abkühlen des Produkts von Anfang an innerhalb des Bereichs stattfindet, der mit Schutzgas, beispielsweise mit Stickstoff, angereichert ist. Ein durch das Abkühlen des Produkts innerhalb der Verpackung entstehendes Vakuum zieht somit beim Austritt der Verpackung aus dem Mikrowellentunnel sofort Schutzgas in die Verpackung. Damit kann der Dampfspüleffekt direkt zum Ansaugen des Schutzgases ausgenutzt werden.

Dadurch, dass der Mikrowellentunnel und die Schutzgasstation nahtlos ineinander übergehen, kann der Packungsinhalt nicht bzw. nur geringfügig von der Atmosphäre der freien Umgebung beeinflusst werden. Das Ausdampfen der Verpackung kann deshalb ohne Verluste an die freie Umgebung zum Ansaugen des Schutzgases verwendet werden.

Da der Abkühlprozess von Anfang an in dem mit Schutzgas angereicherten Bereich durchführbar ist, kann das Ansaugen des Schutzgases in die Verpackung direkt im Anschluss an den Mikrowellentunnel geschehen. Dies bringt einerseits den Vorteil, dass die Vorrichtung insgesamt in kostengünstiger und kompakter Bauweise vorliegt. Anderseits kann sie auch energieeffizienter betreiben lässt, weil sich das an den Mikrowellentunnel anschließende Abkühlen des Packungsinhalts und die damit einhergehende Sogwirkung innerhalb der Verpackung unmittelbar zum Ansaugen des Schutzgases in die Verpackung ausnutzen lässt. Um die Verpackung ausreichend mit Schutzgas zu befüllen, lässt sich damit ggf. eine zusätzliche, gesonderte Vakuumbildung in der Schutzgasstation vermeiden oder kann zumindest mit geringerem Aufwand betrieben werden.

Vorzugsweise bildet die Schutzgasstation einen Schutzgastunnel aus, in welchen der Mikrowellentunnel der Mikrowellenstation nahtlos übergeht. Der Schutzgastunnel und der Mikrowellentunnel schließen damit direkt aneinander an, sodass dazwischen keine zur Umgebung hin offene Transportstrecke bzw. Lücke entsteht, entlang welcher das Abkühlen der mikrowellengegarten Produkte im Freien möglich ist. Dadurch, dass der Mikrowellentunnel in dem Schutzgastunnel mündet, ergibt sich insgesamt entlang der Mikrowellenstation und der Schutzgasstation ein zusammenhängender Tunnel, entlang welchem in unmittelbar aufeinander folgenden Schritten das Mikrowellengaren und das Befüllen der Verpackung mit Schutzgas stattfinden können.

Gemäß einer bevorzugten Ausführungsform der Erfindung weisen die Mikrowellenstation und die Schutzgasstation ein gemeinsames Gehäuse auf. Damit wird ein integraler Aufbau dieser Stationen gebildet, was zu einem bauraumreduzierten sowie Herstellungskosten mindernden Aufbau führt. Durch die Eingliederung der beiden Stationen innerhalb einem gemeinsamen Gehäuse ist es auch besser möglich, die Produkte hygienisch zu verpacken und insbesondere die letztendlich in den Verpackungen eingeschlossene Atmosphäre zu steuern. Vorzugsweise ist das gemeinsame Gehäuse zum Begrenzen des Mikrowellen- und des Schutzgastunnels konfiguriert. Der dadurch entstehende, einheitliche Aufbau schließt zumindest die jeweiligen Prozesse zum Mikrowellengaren sowie zum Begasen der Verpackung mittels Schutzgas ein, wodurch sich ein in hygienischer sowie energieeffizienter Durchlauf für die Verpackungen ergibt.

Zweckmäßigerweise geht die Mikrowellenstation derart in die Schutzgasstation über, dass der Übergang gegenüber der in der Umgebung der Vorrichtung befindlichen Atmosphäre isoliert ist. Damit kann verhindert werden, dass die Verpackung nach dem Mikrowellenprozess in die Umgebung ausdampft bzw. die Atmosphäre aus der Umgebung unkontrolliert in die Verpackung gesaugt wird. In diesem Zusammenhang wäre es sogar denkbar, dass die Verpackungen unter gegenüber der Umgebung hermetischen Bedingungen von der Mikrowellenstation in die Schutzgasstation übergeben werden. Hierfür könnten beispielsweise jeweilige von der Mikrowellenstation und der Schutzgasstation in Produktionsrichtung hintereinander ausgebildete Kammern zumindest temporär für die Übergabe zu einer Kammer zusammengeschlossen werden, um dadurch gegenüber der Umgebung isoliert die Verpackungen aus der Mikrowellenstation in die Schutzgasstation zu transportieren.

Vorzugsweise ist am Ausgang der Mikrowellenstation und/oder am Eingang der Schutzgasstation eine Einrichtung zum Begrenzen eines Gasübergangs des Schutzgases aus der Schutzgasstation in die Mikrowellenstation vorgesehen. Eine solche Einrichtung könnte als integraler Bestandteil am Ausgang des Mikrowellentunnels und/oder als integraler Bestandteil am Eingang des Schutzgastunnels vorliegen. Damit lässt sich der Verbrauch an Schutzgas reduzieren. Vorstellbar wäre es, dass die Einrichtung in Form eines verstellbar gelagerten Schiebers, in Form einer Labyrintheinheit, in Form eines Luftvorhangs und/oder in Form eines auf das Packungsformat reduzierten Durchgangs vorliegt.

Gemäß einer Ausführungsform ist die Vorrichtung zum Steuern oder Regeln eines Schutzgasgehalts innerhalb des mit dem Schutzgas angereicherten Bereichs konfiguriert. Vorstellbar wäre es, dass die Schutzgasstation eine Messeinrichtung zum Erfassen eines Restsauerstoffgehalts innerhalb der in die Schutzgasstation hineingeführten Verpackung aufweist, wobei eine diesbezügliche Messung als Ist-Messwert zum Regeln des Schutzgasgehalts dient. Vorstellbar wäre es, dass die Messeinrichtung als Lasereinrichtung vorliegt, die innerhalb der Schutzgasstation angeordnet ist und zum Durchführen einer Durchlichtmessung durch das freie Packungsvolumen konfiguriert ist, um damit den Restsauerstoffgehalt innerhalb des freien Packungsvolumens zu bestimmen.

Eine zweckmäßige Variante sieht vor, dass die Vorrichtung zum Steuern oder Regeln einer Temperatur der Schutzgasstation konfiguriert ist. Insbesondere wäre es von Vorteil, dass der mit Schutzgas angereicherte Bereich ein auf ein vorbestimmtes Temperaturniveau gekühlter Bereich ist. Dafür kann die Schutzgasstation insgesamt oder bereichsweise gekühlt werden. Vorstellbar wäre es, den Schutzgastunnel mit mindestens einer gekühlten Tunnelbegrenzung auszubilden, um entlang des Schutzgastunnels innerhalb der darin gebildeten Atmosphäre eine gewünschte Temperatur für den Abkühlprozess der Verpackung zu erhalten.

Vorzugsweise ist das Steuern oder Regeln des Schutzgasgehalts innerhalb des mit Schutzgas angereicherten Bereichs und/oder das Steuern oder Regeln der Temperatur der Schutzgasstation in Abhängigkeit eines eingestellten Betriebsparameters der Mikrowellenstation und/oder in Abhängigkeit eines erfassten Produktparameters durchführbar. Damit können die beiden Stationen aufeinander abgestimmt betrieben werden.

Denkbar wäre es, dass das Kühlen der Schutzgasstation in Abhängigkeit einer eingestellten Mikrowellenleistung gesteuert oder geregelt wird. Alternativ oder ergänzend wäre es denkbar, dass das Steuern oder das Regeln der Temperatur der Schutzgasstation in Abhängigkeit einer im Mikrowellentunnel erfassten Produkttemperatur, insbesondere einer darin erfassten maximalen Produkttemperatur, durchführbar ist. Vorzugsweise ist die Schutzgasstation zur Erzeugung eines Kühlluftstroms konfiguriert. Dieser kann insbesondere dafür eingesetzt werden, um die Schutzgasstation auf einem gewünschten Temperaturniveau zu halten. Bevorzugterweise umfasst die Schutzgasstation mindestens eine gekühlte Gehäusewand. In dieser können Kanäle ausgebildet sein, in welchen ein Kühlmittel zirkuliert.

Vorstellbar ist es, dass die Schutzgasstation eine Sprüheinrichtung mit mindestens einer Düse zum gezielten Einblasen des Schutzgases in eine an der Verpackung hergestellte Öffnung sowie eine Erfassungseinrichtung zum Detektieren einer in der Schutzgasstation an einer vorbestimmten Stelle relativ zu der Düse angekommenen Verpackung aufweist. Damit lässt sich die Düse in Abhängigkeit der an der vorbestimmten Stelle erfassten Verpackung betreiben, um zeitlich darauf abgestimmt, zielgerichtet Schutzgas in die Öffnung der Verpackung einzublasen. Insbesondere könnten mehrere Düsen innerhalb der Schutzgasstation vorgesehen sein, um die in einem vorbestimmten Format hineintransportierten Verpackungen, beispielsweise mehrere in nebeneinanderliegenden Reihen in die Schutzgasstation hineintransportierten Verpackungen, jeweils gezielt mit Schutzgas zu befüllen.

Eine vorteilhafte Variante sieht vor, dass eine in Produktionsrichtung entlang der Schutzgasstation gebildete Durchlaufstrecke unabhängig von der Mikrowellenstation änderbar ist. Damit ist es insbesondere möglich, innerhalb der Schutzgasstation eine Länge des mit Schutzgas angereicherten Bereichs zu variieren, sprich eine Kühlstrecke durch diesen Bereich derart lang auszubilden, dass ein gewünschter Schutzgasgehalt innerhalb der die Schutzgasstation durchlaufenden Verpackungen erreicht wird.

Gemäß einer Ausführungsform der Erfindung umfasst die Schutzgasstation einen darin integrierten Etikettierer zum Verschließen der mit dem Schutzgas befüllten Verpackungen. Ein solcher Etikettierer kann die in der Verpackung gebildete Öffnung, die für den austretenden Wasserdampf gebildet ist, mittels eines Klebeetiketts verschließen. Alternativ zum in der Schutzgasstation integrierten Etikettierer wäre es denkbar, dass ein Etikettierer zum Verschließen von aus der Schutzgasstation heraus transportierten Verpackungen stromabwärts der Schutzgasstation vorgesehen ist. Ein solcher Aufbau ermöglicht es, dass die innerhalb der Schutzgasstation mit Schutzgas befüllten Verpackungen aus der Schutzgasstation zunächst ins Freie transportiert werden, wodurch sie auf das Druckniveau in der Umgebung angeglichen werden können, insbesondre die darin enthaltene Atmosphäre durch weiteres Abkühlen geringfügig einziehen. Damit lässt sich ein Schutzgassauerstoffgemisch innerhalb der Verpackung erzeugen.

Eine Variante sieht vor, dass die Mikrowellenstation mindestens einen Kondensator zum Verflüssigen des durch den Mikrowellenprozess entstehenden Wasserdampfs aufweist. Damit lässt sich verhindern, dass sich Flüssigkeit innerhalb der Verpackungen ansammelt.

Zweckmäßig wäre es, wenn die Mikrowellenstation mindestens einen Kondensator zum Verflüssigen des durch den Mikrowellenprozess entstehenden Wasserdampfs aufweist. Der Kondensator kann mit einem Sammelbehälter verbunden sein, um das durch ihn verflüssigte Kondensat aufzufangen. Damit lässt sich verhindern, dass sich Flüssigkeit innerhalb der Mikrowellenstation ansammelt.

Eine Variante sieht vor, dass die Schutzgasstation mindestens einen Stickstoffgenerator aufweist. Ein solcher Stickstoffgenerator kann als interne Einheit eines Gehäuses der Schutzgasstation oder als externe Einheit außerhalb des Gehäuses der Schutzgasstation vorliegen. Damit lässt sich der mit Schutzgas angereicherte Bereich der Schutzgasstation auf einem vorbestimmten Schutzgasgehaltsniveau halten. Gemäß einer Ausführungsform ist der Betrieb des Stickstoffgenerators von einem die in die Schutzgasstation hineintransportierten Verpackungen zahlenmäßig erfassenden Zähler abhängig.

Vorzugsweise weist die Vorrichtung mindestens ein Transportband zum Transportieren von Verpackungen auf. Das Transportband kann dafür eingesetzt werden, die Verpackungen entlang der Mikrowellenstation und entlang der Schutzgasstation zu transportieren, insbesondere um sie aus der Mikrowellenstation direkt in die Schutzgasstation zu transportieren, sodass die Verpackungen nach dem Mikrowellengaren sofort im Anschluss daran innerhalb des mit Schutzgas angereicherten Bereichs der Schutzgasstation aufgenommen sind, sodass die durch den Abkühlprozess erzeugte Sogwirkung von Anfang an zum Ansaugen des Schutzgases in die Verpackungen genutzt werden kann.

Eine Variante betrifft eine Schalenverschließmaschine mit einer erfindungsgemäßen Vorrichtung. Vorzugsweise sind an der Schalenverschließmaschine die Mikrowellenstation und die Schutzgasstation entweder einzeln als Erweiterungsmodule oder gemeinsam als zusammenhängende Erweiterungseinheit lösbar entlang eines Abführbands der Schalenverschließmaschine befestigt. Die Schalenverschließmaschine eignet sich gemäß dieser Ausbaustufe für die Herstellung mikrowellenbehandelter, mit Schutzgas befüllter Verpackungen. Damit lässt sich das Abführband der Schalenverschließmaschine als Transportband der Vorrichtung nutzen, was zu einem bauraumreduzierten Aufbau führt.

Die erfindungsgemäße Vorrichtung lässt sich insbesondere innerhalb einer Produktionslinie einsetzen, die in Produktionsrichtung stromaufwärts der Vorrichtung mindestens eine Schalenverschließmaschine aufweist. Entlang einer solchen Produktionslinie können die mittels der Schalenverschließmaschine hergestellten Verpackungen im Anschluss an den Schalenschließvorgang die erfindungsgemäße Vorrichtung durchlaufen, um daran in nahtlos ineinander übergehenden Schritten mikrowellengegart und anschließend mit Schutzgas bespült zu werden. Für die Produktionslinie ergibt sich damit ein kostengünstiger, bauraumreduzierter Aufbau für einen hygienischen Betrieb.

Die Produktionslinie kann über mindestens eine Lochstanze verfügen, die direkt an der Schalenverschließmaschine, zwischen der Schalenverschließmaschine und der Mikrowellenstation, oder an einem Eingang der Mikrowellenstation angeordnet ist. Diese Lochstanze ist dazu konfiguriert, eine Öffnung in der Verpackung, insbesondere in dessen Deckelfolie, herzustellen, durch welche durch das Mikrowellengaren entstehender Wasserdampf aus der Verpackung ausdampfen kann.

Ferner bezieht sich die Erfindung auf ein Verfahren zum Mikrowellengaren eines innerhalb einer Verpackung aufgenommenen Produkts in einer Mikrowellenstation und zum Anreichern eines freien Packungsvolumens der Verpackung mit einem Schutzgas in einer der Mikrowellenstation in Produktionsrichtung folgenden Schutzgasstation. Das erfindungsgemäße Verfahren sieht vor, dass die mit dem mikrowellengegarten Produkt beladene Verpackung aus einem Mikrowellentunnel der Mikrowellenstation direkt in einen unmittelbar daran anschließenden, mit dem Schutzgas angereicherten Bereich der Schutzgasstation übergeben wird. Ein im Anschluss an den Mikrowellentunnel beginnendes Abkühlen der Verpackungen findet somit von Anfang an innerhalb des dem mit Schutzgas angereicherten Bereichs statt, sodass der durch das Abkühlen gebildete Unterdruck innerhalb der Verpackungen zum Ansaugen des Schutzgases in die Verpackungen genutzt werden kann. Dadurch lassen sich die Verpackungen auf engem Bauraum und mit einfacher Maschinenausstattung ausreichend mit Schutzgas befüllen.

Die Erfindung wird anhand der in den Figuren dargestellten Ausführungsbeispiele genauer erläutert. Es zeigen:
- Figur 1: eine schematische Draufsicht-Darstellung einer Vorrichtung zum Mikrowellengaren eines innerhalb einer Verpackung aufgenommenen Produkts und zum Anreichern eines freien Packungsvolumens mit einem Schutzgas,
- Figur 2: die Vorrichtung aus Figur 1 mit einem integrierten Etikettierer zum Verschließen der Verpackung,
- Figur 3: die Vorrichtung aus Figur 1 mit einem externen Etikettierer zum Verschließen der Verpackung,
- Figur 4: eine Produktionslinie mit einer Vorrichtung gemäß Figur 1 und einer in Produktionsrichtung stromaufwärts positionierten Schalenverschließmaschine, und
- Figur 5: eine im Schnitt dargestellte, schematische Seitenansicht der in Figur 1 gezeigten Vorrichtung.

Technische Merkmale sind in den Figuren durchgehend mit denselben Bezugszeichen versehen.

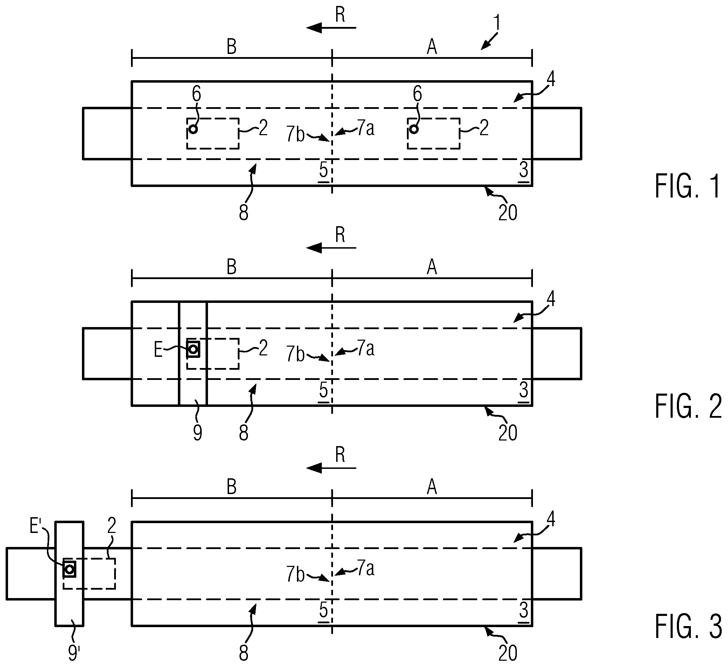

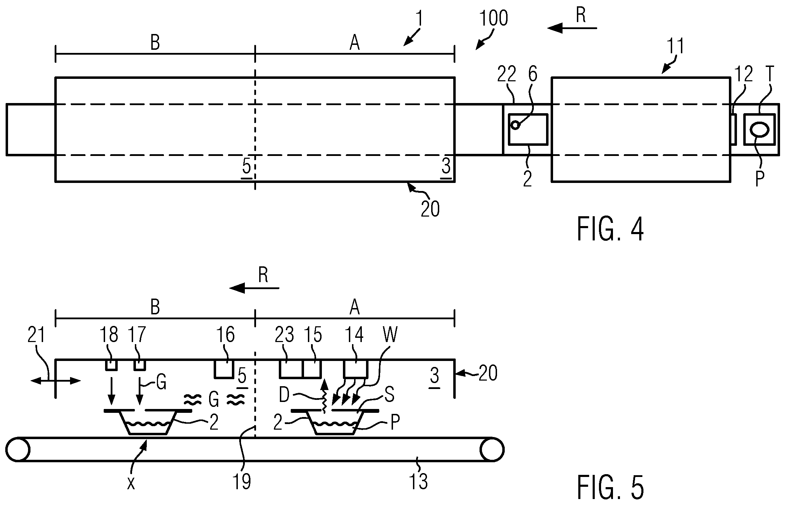

Figur 1 zeigt eine Vorrichtung 1 zum Mikrowellengaren eines innerhalb einer Verpackung 2 aufgenommenen Produkts P und zum Anreichern eines freien Packungsvolumens S mit einem Schutzgas G (siehe auch Figur 5).

Die Vorrichtung 1 aus Figur 1 weist in Produktionsrichtung R eine Mikrowellenstation 3 mit einem Mikrowellentunnel 4 zum Mikrowellengaren des Produkts P der in ihn hineingeführten Verpackung 2 auf. Innerhalb eines durch die Mikrowellenstation 3 gebildeten Bereichs A, d.h. innerhalb des Mikrowellentunnels 4, kann der durch diesen hindurch transportierte Packungsinhalt der Verpackung 2 mittels Mikrowellen erhitzt werden, wodurch Wasserdampf D (siehe Figur 5) entsteht, der durch eine in der Verpackung 2 gebildete Öffnung 6 ausdampfen kann. Dadurch entsteht innerhalb der Verpackung 2 ein Überdruck.

In Produktionsrichtung R unmittelbar hinter der Mikrowellenstation 3 ist eine Schutzgasstation 5 positioniert. Die Mikrowellenstation 3 und die Schutzgasstation 5 bilden einen lückenlosen bzw. nahtlos ineinander übergehenden Aufbau aus, um Verpackungen 2 aus der Mikrowellenstation 3 direkt in die Schutzgasstation 5 transportieren zu können. Die Schutzgasstation 5 bildet einen mit dem Schutzgas G angereicherten Bereich B aus. Entlang des Bereichs B kann das Schutzgas G in die innerhalb des Bereichs B transportierte, sich entlang des Bereichs B abkühlende Verpackung 2 einströmen. Dabei bewirkt das Abkühlen der Verpackung 2, dass ein Unterdruck innerhalb der Verpackung 2 entsteht, der zum Einsaugen des Schutzgases G in die Verpackung 2 geeignet ist.

Das Ausdampfen der Verpackung 2 geschieht dabei nicht im Freien, sondern in einer zwischen der Mikrowellenstation 3 und Schutzgasstation 5 gebildeten geschlossenen Umgebung, sodass die durch das Abkühlen der Verpackung 2 entstehende Sogwirkung von Anfang an innerhalb des mit Schutzgas G angereicherten Bereichs B geschieht.

Entlang des unmittelbar an die Mikrowellenstation 3 anschließenden, durch die Schutzgasstation 5 gebildeten Bereichs B kann das innerhalb dieses Bereichs B angereicherte Schutzgas G durch die in der Verpackung 2 gebildete Verpackungsöffnung 6 in die Verpackung 2 gesaugt werden. Das Einsaugen des Schutzgases G in die Verpackung 2 kann durch Abnahme des Überdrucks durch Abkühlen der Verpackung 2, sprich durch abkühlungsbedingte Vakuumbildung innerhalb der Verpackung 2, unterstützt werden. Dieser Effekt kommt vor allen Dingen dann wirksam zustande, wenn die Mikrowellenstation 3 und die Schutzgasstation 4 unmittelbar aneinander angrenzend, direkt ineinander übergehen, d.h. ohne dazwischen einen Transport der Verpackung 2 entlang einer zur Umgebung hin offenen Strecke zu ermöglichen.

Die Schutzgasstation 5 aus Figur 1 bildet einen Schutzgastunnel 8, in welchen der Mikrowellentunnel 4 mündet. Der mit Schutzgas G angereicherte Bereich B ist innerhalb des Schutzgastunnels 8 gebildet.

Der in Figur 1 schematisch dargestellte Aufbau ermöglicht es, dass die mit den Mikrowellen gegarten Produkt P beladene Verpackung 2 aus dem Mikrowellentunnel 4 der Mikrowellenstation direkt in den unmittelbar daran anschließenden, mit dem Schutzgas G angereicherten Bereich B der Schutzgasstation 5 übergeben wird, indem ein Ausgang 7a der Mikrowellenstation 3 und ein Eingang 7b der Schutzgasstation 5 beieinanderliegen, insbesondere einander entsprechen.

Die im Mikrowellentunnel 4 in Figur 1 gezeigte Verpackung 2 wird entlang des Mikrowellentunnels 4 mikrowellengegart, wodurch Wasserdampf durch die Öffnung 6 aus der Verpackung 2 innerhalb der Mikrowellenstation 3 austritt. Zum Zeitpunkt, zu welchem die mikrowellengegarte Verpackung 2 durch den Ausgang 7a der Mikrowellenstation und den daran angrenzenden Eingang 7b der Schutzgasstation 5 in den Schutzgastunnel 8 eintritt, beginnt sich das in der Verpackung 2 aufgenommene, mikrowellengegarte Produkt P abzukühlen. Dadurch nimmt der innerhalb der Verpackung 2 vorliegende Überdruck ab, sodass eine Sogwirkung innerhalb der Verpackung 2 entsteht, mittels welcher sofort das im Bereich B enthaltene Schutzgas G in diese eingesaugt werden kann. Dadurch, dass die Mikrowellenstation 3 und die Schutzgasstation 5 direkt ineinander übergehen, d.h. beide zusammen einen lückenlosen Aufbau bereitstellen, kann mit beginnendem Abkühlen der Verpackung 2 zeitgleich die Sogwirkung auf das Schutzgas G erfolgen, sodass dieses gleich zu Beginn des Abkühlprozesses in die Verpackung 2 eingesaugt werden kann.

Figur 2 zeigt die Vorrichtung 1 aus Figur 1 mit einem integrierten Etikettierer 9, der innerhalb der Schutzgasstation 5 angeordnet ist. Der Etikettierer 9 kann die entlang des Bereichs B mit Schutzgas G befüllte Verpackung 2 mit einem Etikett verschließen, welches über die Öffnung 6 an der Verpackung 2 befestigt wird.

Figur 3 zeigt die Vorrichtung 1 aus Figur 1 mit einem externen Etikettierer 9', der in Produktionsrichtung R außerhalb der Schutzgasstation 5 stromabwärts zu dieser angeordnet ist, um die in der Verpackung 2 gebildete Öffnung 6 mit einem Etikett E' zu verschließen. Zwischen der Schutzgasstation 5 und dem Etikettierer 9' aus Figur 3 durchläuft die Verpackung 2 eine zur Umgebung hin offene Strecke, d.h. in freier Atmosphäre, wodurch ggf. Wasserdampf D weiter aus der Öffnung 6 entweichen kann und dadurch mittels Abkühlung die in der Umgebung enthaltene Atmosphäre noch durch die Öffnung 6 in die Verpackung 2 einströmen kann. Damit kann in der Verpackung 2 ein Sauerstoffschutzgasgemisch eingeschlossen werden.

Figur 4 zeigt eine Produktionslinie 100 mit einer Vorrichtung 1 sowie einer in Produktionsrichtung R stromaufwärts positionierten Schalenverschließmaschine 11. Die Schalenverschließmaschine 11 ist dazu konfiguriert, aus bereitgestellten, mit Produkt P beladenen Schalen T und einem an der Schalenverschließmaschine 11 bevorrateten Deckelmaterial Verpackungen 2 mit der Öffnung 6 herzustellen. Die Schalenverschließmaschine 11 weist dafür eingangs eine Lochstanze 12 auf, die zum Herstellen der Öffnung 6 in der Verpackung 2 ausgebildet ist. Die Schalenverschließmaschine 11 verfügt über ein Abführband 22, mittels welchem der Vorrichtung 1 Verpackungen 2 übergeben werden können.

In Figur 4 sind die Schalenverschließmaschine 11 und die Vorrichtung 1 als eigenständige Maschinen innerhalb der Produktionslinie 110 hintereinander angeordnet. Die Schalenverschließmaschine 11 kann damit wahlweise um die Vorrichtung 1 erweitert werden, um die Produktionslinie 100 zu bilden.

Vorstellbar wäre ein integraler Aufbau, bei welchem die Mikrowellenstation 3 und die Schutzgasstation 5 entweder einzeln als Erweiterungsmodule oder gemeinsam als zusammenhängende Erweiterungseinheit lösbar entlang des Abführbands 22 der Schalenverschließmaschine 11 befestigt sind. Bei diesem Aufbau würde das Abführband 22 als Transportband der Erweiterungsmodule bzw. der Erweiterungseinheit dienen.

Figur 5 zeigt die Vorrichtung 1 in schematischer Schnittdarstellung in Seitenansicht. Die Vorrichtung 1 verfügt über ein Transportband 13, das dazu konfiguriert ist, Verpackungen 2 entlang der Mikrowellenstation 3 sowie entlang der Schutzgasstation 5 zu transportieren. Bei diesem Transportband 13 könnte es sich ggf. um das Abführband 22 der Schalenverschließstation 11 handeln, sofern die die Mikrowellenstation 3 und die Schutzgasstation 5 entweder einzeln als Erweiterungsmodule oder gemeinsam als zusammenhängende Erweiterungseinheit lösbar entlang des Abführbands 22 der Schalenverschließmaschine 11 befestigt sind.

Gemäß Figur 5 verfügt die Vorrichtung 1 über ein Gehäuse 20. Die Mikrowellenstation 3 und die Schutzgasstation 5 sind durch eine Einrichtung 19, die zumindest zum Begrenzen eines Gasübergangs des Schutzgases G aus der Schutzgasstation 5 in die Mikrowellenstation 3 ausgebildet ist, getrennt. Die Einrichtung 19 kann ein Schieber, eine Labyrintheinheit, ein Luftvorhang und/oder ein auf das Packungsformat reduzierter Durchgang sein. Die Einrichtung 19 kann als integraler Bestandteil des Ausgangs 7a der Mikrowellenstation 3 und/oder des Eingangs 7b der Schutzgasstation 5 ausgebildet sein.

Anhand des Doppelpfeils 21 in Figur 5 wird angedeutet, dass sich die Schutzgasstation 5, insbesondere der Schutzgastunnel 8, erweitern lässt, um die Abkühlstrecke für die Verpackung 2, sprich den mit Schutzgas G angereicherten Bereich B längenmäßig variieren zu können.

In der Mikrowellenstation 3 ist eine Mikrowelleneinheit 14 angeordnet, um das in der Verpackung 2 aufgenommene Produkt P mittels Mikrowellen W zu erhitzen. Der während des Heizvorgangs innerhalb der Mikrowellenstation 3 aus der Verpackung 2 durch die darin gebildete Öffnung 6 austretende Wasserdampf D kann mittels eines Kondensators 15 aufgefangen, verflüssigt und in einen Sammelbehälter 23 abtransportiert werden.

Beim Eintreten der mikrowellengegarten Verpackung 2 in die direkt anschließende Schutzgasstation 5, d.h. beim Übergang der Verpackung 2 aus dem Bereich A in den daran unmittelbar anschließenden Bereich B mit Schutzgas G, beginnt sich das in der Verpackung 2 aufgenommene Produkt P abzukühlen, wodurch bereits am Eingang 7b der Schutzgasstation 5 das Schutzgas G durch die Öffnung 6 in die Verpackung 2 eingesaugt werden kann.

Figur 5 zeigt weiter, dass innerhalb der Schutzgasstation 5 ein Stickstofferzeuger 16 vorgesehen ist, um einen Stickstoffgehalt des Schutzgases G innerhalb des Bereichs B herzustellen bzw. aufrechtzuerhalten. Ein solcher Stickstofferzeuger 16 kann alternativ oder ergänzend auch als externe Einheit vorliegen, die außerhalb der Schutzgasstation 5 positioniert ist und mittels einer oder mehreren Gasleitungen mit der Schutzgasstation 5 verbunden ist, um einen Stickstoffgehalt des Schutzgases G innerhalb des Bereichs B herzustellen bzw. aufrechtzuerhalten.

Figur 5 zeigt ferner eine innerhalb der Schutzgasstation 5 positionierte Düse 17, die dazu ausgebildet ist, gezielt Schutzgas G durch die Öffnung 6 in die Verpackung 2 einzusprühen. Zum Erfassen einer vorbestimmten Position x der Verpackung 2 innerhalb der Schutzgasstation 5 kann eine Erfassungseinheit 18 vorgesehen sein.

## Patentansprüche

1. Vorrichtung (1) zum Mikrowellengaren eines innerhalb einer Verpackung (2) aufgenommenen Produkts und zum Anreichern eines freien Packungsvolumens (S) mit einem Schutzgas (G), wobei die Vorrichtung (1) in Produktionsrichtung (R) eine Mikrowellenstation (3) mit einem Mikrowellentunnel (4) zum Mikrowellengaren des Produkts (P) der in ihn hineingeführten Verpackung (2) und eine in Produktionsrichtung (R) der Mikrowellenstation (3) nachgelagerte Schutzgasstation (5) aufweist, die einen mit dem Schutzgas (G) angereichten Bereich (B) ausgebildet, **dadurch gekennzeichnet, dass** für eine direkte Übergabe der mit dem mikrowellengegarten Produkt (P) beladenen Verpackung (2) aus dem Mikrowellentunnel (4) der Mikrowellenstation (3) in den mit dem Schutzgas (G) angereicherten Bereich (B) der Schutzgasstation (5) ein Ausgang (7a) des Mikrowellentunnels (4) und ein Eingang (7b) des mit dem Schutzgas (G) angereicherten Bereichs (A) der Schutzgasstation (5) unmittelbar aneinander angrenzend angeordnet sind.

2. Vorrichtung nach Anspruch 1, **dadurch gekennzeichnet, dass** die Schutzgasstation (5) einen Schutzgastunnel (8) ausbildet, in welchen der Mikrowellentunnel (4) der Mikrowellenstation (3) nahtlos übergeht.

3. Vorrichtung nach Anspruch 1 oder 2, **dadurch gekennzeichnet, dass** die Mikrowellenstation (3) und die Schutzgasstation (5) ein gemeinsames Gehäuse (20) aufweisen, vorzugsweise ein zum Begrenzen des Mikrowellen- und des Schutzgastunnels (4, 8) konfiguriertes Gehäuse (20).

4. Vorrichtung nach einem der vorangehenden Ansprüche, **dadurch gekennzeichnet, dass** am Ausgang (7a) der Mikrowellenstation (3) und/oder am Eingang (7b) der Schutzgasstation (5) eine Einrichtung (19) zumindest zum Begrenzen eines Gasübergangs des Schutzgases (G) aus der Schutzgasstation (5) in die Mikrowellenstation (3) vorgesehen ist, insbesondere ein Schieber, eine Labyrintheinheit, ein Luftvorhang und/oder ein auf das Packungsformat reduzierter Durchgang angeordnet ist.

5. Vorrichtung nach einem der vorangehenden Ansprüche, **dadurch gekennzeichnet, dass** die Vorrichtung (1) zum Steuern oder Regeln eines Schutzgasgehalts innerhalb des mit dem Schutzgas (G) angereicherten Bereichs (B) und/oder dass die Vorrichtung (1) zum Steuern oder Regeln einer Temperatur der Schutzgasstation (5) konfiguriert ist.

6. Vorrichtung nach Anspruch 5, **dadurch gekennzeichnet, dass** das Steuern oder Regeln des Schutzgasgehalts innerhalb des Bereichs (B) und/oder das Steuern oder Regeln der Temperatur der Schutzgasstation (5) in Abhängigkeit eines eingestellten Betriebsparameters der Mikrowellenstation (3) und/oder in Abhängigkeit eines erfassten Produktparameters durchführbar ist.

7. Vorrichtung nach einem der vorangehenden Ansprüche, **dadurch gekennzeichnet, dass** die Schutzgasstation (5) eine Sprüheinrichtung mit mindestens einer Düse (17) zum gezielten Einblasen des Schutzgases (G) in eine an der Verpackung (2) hergestellte Öffnung (6) sowie eine Erfassungseinrichtung (18) zum Detektieren einer in der Schutzgasstation (5) an einer vorbestimmten Position (x) relativ zu der Düse (17) angekommenen Verpackung (2) aufweist.

8. Vorrichtung nach einem der vorangehenden Ansprüche, **dadurch gekennzeichnet, dass** eine in Produktionsrichtung (R) entlang der Schutzgasstation (5) gebildete Durchlaufstrecke unabhängig von der Mikrowellenstation (3) längenmäßig änderbar ist.

9. Vorrichtung nach einem der vorangehenden Ansprüche, **dadurch gekennzeichnet, dass** die Schutzgasstation (5) einen darin integrierten Etikettierer (9) zum Verschließen der mit dem Schutzgas (G) befüllten Verpackungen (2) aufweist oder dass die Vorrichtung (1) einen Etikettierer (9') zum Verschließen von aus der Schutzgasstation (5) heraustransportierten Verpackungen (2) aufweist.

10. Vorrichtung nach einem der vorangehenden Ansprüche, **dadurch gekennzeichnet, dass** die Mikrowellenstation (3) mindestens einen Kondensator (15) zum Verflüssigen des durch den Mikrowellenprozess entstehenden Wasserdampfs (D) aufweist und/oder die Schutzgasstation (5) mindestens einen Stickstoffgenerator (16) aufweist.

11. Vorrichtung nach einem der vorangehenden Ansprüche, **dadurch gekennzeichnet, dass** die Vorrichtung (1) mindestens ein Transportband (13) zum Transportieren von Verpackungen (2) aufweist.

12. Schalenverschließmaschine (11) mit einer Vorrichtung (1) nach einem der vorangehenden Ansprüche, **dadurch gekennzeichnet, dass** die Mikrowellenstation (3) und die Schutzgasstation (5) entweder einzeln als Erweiterungsmodule oder gemeinsam als zusammenhängende Erweiterungseinheit lösbar entlang eines Abführbands (22) der Schalenverschließmaschine (11) befestigt sind.

13. Produktionslinie (100) mit mindestens einer Vorrichtung (1) nach einem der vorangehenden Ansprüche, **dadurch gekennzeichnet, dass** die Produktionslinie (100) in Produktionsrichtung (R) stromaufwärts der Vorrichtung (1) mindestens eine Schalenverschließmaschine (11) aufweist.

14. Produktionslinie nach Anspruch 13, **dadurch gekennzeichnet, dass** die Produktionslinie (100) über mindestens eine Lochstanze (12) verfügt, die direkt an der Schalenverschließmaschine (11), zwischen der Schalenverschließmaschine (11) und der Mikrowellenstation (3), oder an einem Eingang der Mikrowellenstation (3) angeordnet ist.

15. Verfahren zum Mikrowellengaren eines innerhalb einer Verpackung (2) aufgenommenen Produkts (P) in einer Mikrowellenstation (3) und zum Anreichern eines freien Packungsvolumens (S) der Verpackung (2) mit einem Schutzgas (G) in einer der Mikrowellenstation (3) in Produktionsrichtung (R) folgenden Schutzgasstation (5), **dadurch gekennzeichnet, dass** die mit dem mikrowellengegarten Produkt (P) beladene Verpackung (2) aus einem Mikrowellentunnel (4) der Mikrowellenstation (3) direkt in einen in Produktionsrichtung (R) unmittelbar an den Mikrowellentunnel (4) anschließenden, mit dem Schutzgas (G) angereicherten Bereich (B) der Schutzgasstation (5) übergeben wird.
